(19) Europäisches Patentamt
European Patent Office
Office européen des brevets

(11) Numéro de publication: **0 367 696 B1**

(12) **FASCICULE DE BREVET EUROPEEN**

(45) Date de publication de fascicule du brevet: **07.09.94**

(51) Int. Cl.5: **C08G 77/38**, C08K 5/54, C08L 83/04

(21) Numéro de dépôt: **89420424.7**

(22) Date de dépôt: **03.11.89**

# (54) Procédé de préparation de diorganopolysiloxanes à groupement terminaux alcoxy.

(30) Priorité: **04.11.88 FR 8815312**

(43) Date de publication de la demande:
**09.05.90 Bulletin 90/19**

(45) Mention de la délivrance du brevet:
**07.09.94 Bulletin 94/36**

(84) Etats contractants désignés:
**AT BE CH DE ES FR GB GR IT LI LU NL SE**

(56) Documents cités:
**EP-A- 0 069 256**
**FR-A- 1 495 011**
**FR-A- 2 540 128**
**US-A- 4 111 890**
**DE-A- 3 727 565**
**FR-A- 2 410 004**
**FR-A- 2 550 540**
**US-A- 4 467 063**

(73) Titulaire: **RHONE-POULENC CHIMIE**
**25, quai Paul Doumer**
**F-92408 Courbevoie Cédex (FR)**

(72) Inventeur: **Cocco, Roger**
**Rue de la Croix-Rouge**
**Solaize**
**F-69360 Saint-Symphorien-D'Ozon (FR)**
Inventeur: **Letoffe, Michel**
**5, avenue de Limburg**
**F-69110 Sainte-Foy-Les-Lyon (FR)**
Inventeur: **Nielsen, Georges**
**Impasse des Muguets**
**Montagny**
**F-69700 Givors (FR)**

(74) Mandataire: **Trolliet, Maurice et al**
**RHONE-POULENC CHIMIE**
**Direction de la Propriété Industrielle**
**Centre de Recherches des Carrières**
**B.P. 62**
**F-69192 Saint-Fons Cédex (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne un procédé de préparation de diorganopolysiloxanes à groupements terminaux alcoxy, dénommés ci-dessous PF (polymères fonctionnalisés) et l'utilisation, d'au moins certains d'entre eux, notamment comme l'un des constituants essentiels de compositions élastomères organopolysiloxanes mono composantes, stables au stockage en absence d'humidité et réticulant à l'humidité atmosphérique à température ambiante, dénommées par la suite compositions pour élastomères vulcanisables à froid (EVF).

Il est connu de préparer ces PF en faisant réagir un di, un tri ou un tétra alcoxysilane sur une huile diorganopolysiloxane comprenant un groupement hydroxy lié à l'atome de silicium à chaque extrémité de sa chaîne, mais il est nécessaire d'utiliser un catalyseur. De nombreux brevets ont été déposés revendiquant l'utilisation de catalyseurs spécifiques pour cette réaction de fonctionnalisation.

Le brevet US 3 542 901 propose comme catalyseur une amine. Ce catalyseur est efficace mais la réaction est assez lente (par exemple 15 à 30 mn à 60° C pour les alcoxysilanes assez réactifs tels que Si-$(OCH_3)_4$ ou Vi Si $(OCH_3)_3$). Avec des alcoxysilanes peu réactifs, on doit avoir recours à des temps beaucoup plus longs ou bien n'obtenir que des réactions incomplètes. Or, il est connu que la présence de silanols résiduels est généralement néfaste pour la stabilité (voir US 4 489 191-A ainsi que les demandes de brevets français n° 2 597 876 et 2 597 877). De plus, il est difficile d'éliminer complètement l'amine qui peut avoir un effet néfaste sur la stabilité au stockage de la composition ; elle peut provoquer également l'apparition de colorations jaunâtres soit au cours de la conservation du mastic soit sur le produit réticulé.

C'est pourquoi de nombreux autres systèmes catalytiques ont été proposés. On peut citer :

- acétate de potassium : US 3,504,051
- oxydes minéraux divers : FR 1 495 011
- dérivés organiques du titane : US-A-4 111 890
- titanate plus amine : US 3,647,846
- chelate d'alcoxy aluminium : GB-A-2 144 758
- hydroxylamine N-N' disubstituée : FR-A-2 508 467
- acide carboxylique plus amine : FR 2 604 713
- carbamates : EP 0 210 402
- composés organiques ayant une fonction oxime : FR 2 597 875.

Certains de ces catalyseurs sont un peu plus actifs que les amines mais il est néammoins nécessaire de chauffer à 60-70° C pour obtenir des temps de fonctionnalisation de 5 à 10 minutes. En outre, ces catalyseurs, ou leurs résidus, peuvent avoir une influence néfaste sur la stabilité au stockage notamment en présence des catalyseurs de prise ainsi que sur les propiétés des réticulat car il est difficile ou impossible de les éliminer totalement après réaction.

Un autre procédé pour faire des huiles fonctionnalisées (PF) consiste à utiliser des silanes mixtes présentant en plus des groupements alcoxy, un groupe hydrolysable tel qu'un groupe amido, amino, carbamate, oxime, etc..., éventuellement en présence d'un catalyseur de fonctionnalisation connu et d'un polyalcoxysilane.

Des procédés de ce type sont décrits notamment dans les brevets US-A-3 697 568, US-A-3 896 079 et EP-A-69 256.

Ces procédés sont efficaces mais nécessitent l'utilisation de silanes mixtes coûteux. Par ailleurs les produits organiques issus des groupes hydrolysables après réaction peuvent avoir un effet néfaste sur la composition EVF (voir à ce sujet les pages 4 et 5 du brevet français FR-A-2 543 562).

La présente invention a pour but de proposer un catalyseur de fonctionnalisation très efficace pour l'obtention de diorganopolysiloxanes linéaires comprenant au moins un groupement alcoxy lié à un atome de silicium à chaque extrémité de leur chaîne (polymères appelés PF ci-après ou huiles fonctionnalisées).

Un autre but de la présente invention est un catalyseur de fonctionnalisation qui permet l'obtention de PF en opérant à la température ambiante, notamment en utilisant du $CH_3$ Si $(OCH_3)_3$, du $CH_2 = CH$ - Si $(OCH_3)_3$ ou du Me Vi Si $(OCH_3)_2$ comme agent de fonctionnalisation (Me représentant le groupement méthyle - $CH_3$ et Vi représentant le groupement vinyle - $CH = CH_2$).

Un autre but de la présente invention est un catalyseur de fonctionnalisation qui permet d'obtenir des PF, à température ambiante, en un temps inférieur à 15 minutes, avantageusement inférieur à 10 minutes, de préférence égal ou inférieur à 5 minutes, notamment en utilisant comme agent de réticulation un de ceux mentionnés ci-dessus.

Un autre but de la présente invention est l'utilisation d'un catalyseur bon marché, disponible dans le commerce (de la chimie) et pouvant être utilisé, même en grande quantité, pendant la réaction de fonctionnalisation.

Un autre but de la présente invention est un catalyseur de fonctionnalisation pouvant être aisément neutralisé à la fin de la réaction de fonctionnalisation, notamment par un silylphosphate.

Un autre but de la présente invention est un catalyseur de fonctionnalisation qui en fin de réaction de fonctionnalisation peut être neutralisé sans avoir à se presser pour effectuer cette neutralisation, c'est-à-dire que l'on peut commencer la neutralisation par exemple une heure après que la réaction de fonctionnalisation a été terminée.

Un autre but de la présente invention est un catalyseur de fonctionnalisation qui, après sa neutralisation et éventuellement la dévolatilisation de la masse réactionnelle en fin de réaction de fonctionnalisation, permet la préparation, avec le PF obtenu (contenant le produit de réaction de neutralisation du catalyseur), de compositions pour élastomères vulcanisables à foid (EVF) stables au stockage en absence d'humidité et réticulant à l'humidité atmosphérique à température ambiante.

De telles compositions présentent l'avantage de ne pas nécessiter l'utilisation de composés (Scavengers) destinés à éliminer les dernières traces de silanols, tels que ceux décrits dans les brevets n° EP 69 256, EP 104 179 et FR 2 543 562.

Il a donc été trouvé et c'est ce qui fait l'objet de la présente invention un procédé pour la préparation de diorganopolysiloxane linéaire comprenant au moins un groupement alcoxy lié à un atome de silicium à chaque extrémité de sa chaîne, ledit procédé étant caractérisé en ce qu'on fait réagir au moins un diorganopolysiloxane linéaire comprenant un groupement hydroxy lié à un atome de silicium à chaque extrémité de sa chaîne avec par motif silanol au moins 1 mole d'au moins un polyalcoxysilane de formule :

$(R^4)_c (R^1)_a Si (OR^2)_{4-(a+c)}$ (3)

en présence d'une quantité catalytiquement efficace de lithine,

- où a est 0 ou 1; ou 2,
- où c est 0 ou 1, ou 2,
- où a + c = 0 ou 1 ou 2,
- où $R^1$ représente
  - un radical monovalent hydrocarboné saturé ou non en $C_1$ à $C_{13}$', aliphatique, cyclanique ou aromatique, pouvant comporter une fonction epoxy, amine primaire, secondaire, tertiaire, mercapto, ou
  - un radical $-(CH_2)_2-CH_2$ Cl
- où $R^2$ représente un radical organique aliphatique ayant de 1 à 8 atomes de carbone choisi notamment entre les radicaux alkyle, les radicaux alkyléther, les radicaux alkylester, les radicaux alkylcétone, les radicaux alkylcyano et les radicaux aralkyle ayant de 7 à 13 atomes de carbone, étant entendu que les groupements alcoxy du silane de formule (3) peuvent avoir chacun une signification différente pour $R^2$ ou la même signification,
- où $R^4$ représente un radical monovalent hydrocarboné saturé' ou non en $C_1$ à $C_{13}$ aliphatique, cyclanique ou aromatique, $R^4$ pouvant être identique à $R^1$,

Un autre but de la présente invention est l'utilisation de diorganopolysiloxanes linéaires, notamment ceux comprenant au moins deux groupements alcoxy à chaque extrémité de chaîne obtenus selon le procédé de la présente invention pour la préparation de compositions polysiloxane monocomposantes, stables au stockage on absence d'humidité et réticulant en élastomère en présence d'humidité.

Plus précisément les diorganosiloxanes comprenant au moins un groupement alcoxy à chaque extrémité de leur chaîne ont pour formule :

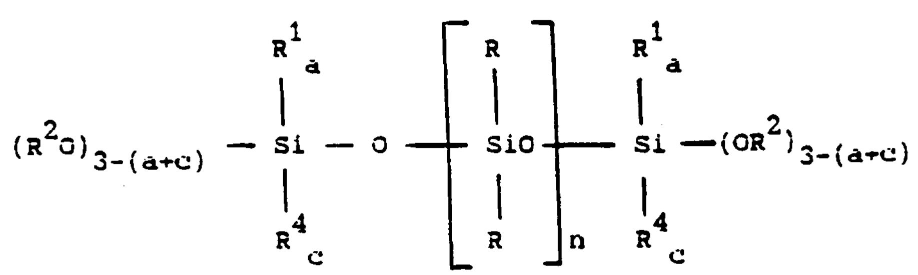

(1)

et le diorganopolysiloxane comprenant un groupement hydroxy à chaque extrémité de sa chaîne a pour formule :

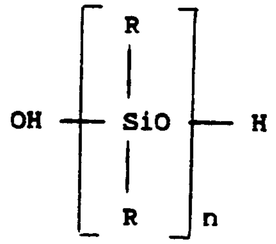

(2)

- où $R^1$, $R^2$ et $R^4$ ont la même signification que celle donnée ci-avant pour le silane de formule (3),
- où les radicaux R, identiques ou différents représentent des radicaux monovalents hydrocarbonés ayant de 1 à 10 atomes de carbone, éventuellement substitués par des atomes d' halogènes ou des groupes cyano. De préférence les radicaux R sont choisis parmi les radicaux méthyle, phényle, vinyle et trifluoro-3,3,3 propyle.
- où a est 0, ou 1, ou 2,
- où c = 0, ou 1, ou 2,
- où a + c = 0, ou 1, ou 2,
- où n a une valeur suffisante pour conférer aux polymères de formule (1) et (2) une viscosité de 25 à 1 000 000 mPa.s à 25 °C, étant entendu que le polysiloxane de formule (1) peut avoir une formule moyenne dans laquelle la valeur de n est plus forte ou plus faible que la valeur de n du diorganopolysiloxane (2) réagissant sur le silane de formule (3).

Les radicaux R mentionnés ci-avant comprennent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle.
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle.
- les radicaux alcényles ayant de 2 à 4 atomes de carbone tels que les radicaux vinyle, allyle, butène-2 yle.
- les radicaux aryles et halogénoaryles mononucléaires ayant de 6 à 10 atomes de carbone tels que les radicaux phényle, tolyle, xylyle, chlorophényle, dichlorophényle, trichlorophényle.
- les radicaux cyanoalkyles dont les chaînons alkyles ont de 2 à 3 atomes de carbone tels que les radicaux $\beta$-cyanoéthyle et -cyanopropyle.

A titre d'exemples concrets de motifs $R_2SiO$ présents dans l'alpha, oméga dihydroxydiorganopolysiloxane de formule (2) on peut citer :

$(CH_3)_2SiO$,
$CH_3(CH_2=CH)SiO$
$CH_3(C_6H_5)SiO$
$(C_6H_5)_2SiO$,
$CF_3CH_2CH_2(CH_3)SiO$
$NC\text{-}CH_2CH_2(CH_3)SiO$
$NC\text{-}CH(CH_3)CH_2(CH_2=CH)SiO$
$NC\text{-}CH_2CH_2CH_2(C_6H_5)SiO$

Il doit être compris que dans le procédé selon la présente invention, on peut utiliser comme polymère de formule (2) un mélange constitué de polymères alpha, oméga-di(hydroxy)- diorganopolysiloxanes qui diffèrent entre eux par le poids moléculaire et/ou la nature des groupements liés aux atomes de silicium. Il doit être indiqué de plus que le polymère de formule (2) peut éventuellement comprendre des motifs monoorganosiloxy $RSiO_{1,5}$ et/ou des motifs $SiO_2$, dans la proportion d'au plus 2 % par rapport au nombre de motifs diorganosiloxy $R_2SiO$

Ces polymères alpha, oméga-di(hydroxy)diorganopolysiloxanes sont commercialisés ; en outre, ils peuvent être aisément fabriqués selon des techniques maintenant bien connues.

Parmi les polyalcoxysilanes de formule $(R^4)_c(R^1)_aSi(OR^2)_{4-(a+c)}$ pouvant être utilisés dans le procédé selon la présente invention on peut notamment citer ceux ci-après :

$Si(OCH_3)_4$
$Si(OCH_2CH_3)_4$
$Si(OCH_2CH_2CH_3)_4$

$(CH_3O)_3SiCH_3$
$(C_2H_5O)_3SiCH_3$
$(CH_3O)_3SiCH = CH_2$
$(C_2H_5O)_3SiCH = CH_2$
$(CH_3O)_3SiCH_2\text{-}CH = CH_2$
$(CH_3O)_3Si[CH_2\text{-}(CH_3)C = CH_2]$
$(C_2H_5O)_3Si(OCH_3)$
$Si(OCH_2\text{-}CH_2\text{-}OCH_3)_4$
$CH_3Si(OCH_2\text{-}CH_2\text{-}OCH_3)_3$
$CH_2 = CHSi(OCH_2CH_2OCH_3)_3$
$C_6H_5Si(OCH_3)_3$
$C_6H_5Si(OCH_2\text{-}CH_2\text{-}OCH_3)_3$

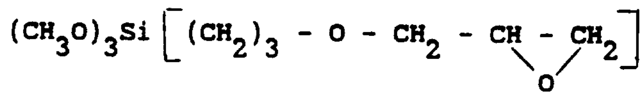

$(CH_3O)_3Si\ [(CH_2)_2 - CH_2\ Cl]$
$(CH_3O)_3Si\ [(CH_2)_3 - OOC - (CH_3)\ C = CH_2]$

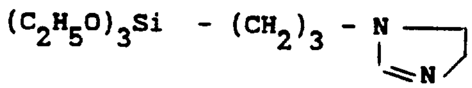

$(C_2H_5O)_3Si\ (CH_2)_2 - CH_2Cl$
$(CH_3O)_3Si\ (CH_2)_3 - NH_2$
$(C_2H_5O)_3Si\ (CH_2)_3 - NH_2$
$(CH_3O)_3Si\ (CH_2)_3 - NH - (CH_2)_2 - NH_2$
$(C_2H_5O)_3Si\ (CH_2)_3 - NH - (CH_2)_2 - NH_2$
$(CH_3O)_3\text{-}Si(CH_2)_3 - SH$
$(CH_3)\ (CH_2 = CH)Si(OCH_3)_2$

Les polyalcoxysilanes les plus couramment utilisés sont :
$Si(OC_2H_5)_4$ , $CH_3Si(OCH_3)_3$ , $CH_3Si(OC_2H_5)_3$ , $(C_2H_5O)_3Si(OCH_3)$ , $CH_2 = CH - Si(OCH_3)_3$ , $CH_3\text{-}(CH_2 = CH)Si(OCH_3)_2$ , $CH_2 = CH - Si(OC_2H_5)_3$.

En ce qui concerne la lithine (ou hydroxyde de lithium) mise en oeuvre en tant que catalyseur, elle se trouve largement dans le commerce. Sa formule est LiOH ou LiOH, $H_2o$. De préference elle est utilisée en solution dans un alcool, tel que par exemple du méthanol ou de l'éthanol.

Dans le procédé selon la présente invention, pour une mole de groupement silanol (≡ SiOH) du polydiorganosiloxane de formule (2) comprenant un groupement hydroxy lié a un atome de silicium à chaque extrémités de chaîne, on utilise généralement de 1 à 60 moles de polyalcoxysilane de formule (3), l'excès de cet alcoxysilane (3) étant d'autant plus important que le poids moléculaire du polydiorganopolysiloxane de formule (2) est plus grand.

Par quantité catalytiquement efficace de lithine on entend une quantité telle que la vitesse de réaction est notablement améliorée et que la température de la réaction est la plus proche possible de la température ambiante, notamment en utilisant du $CH_3Si(OCH_3)_3$, du $CH_2 = CH - Si(OCH_3)_3$ ou du Me ViSi-$(OCH_3)_3$ comme agent de fonctionnalisation. Généralement on utilise de 0,001 à 0,5 mole de lithine par rapport à 1 mole de groupement silanol ≡ SiOH du polydiorganosiloxane de formule (2), étant entendu que pour avoir 1 mole de ≡ SiOH il faut 0,5 mole du polydiorganosiloxane de formule (2).

Le procédé selon la présente invention est mis en oeuvre à l'abri de l'humidité, par exemple dans un réacteur fermé muni d'une egitation dans lequel on a fait le vide, puis remplace l'air chassé par un gaz anhydre, par exemple par de l'azote.

On charge les réactifs et le catalyseur dans le réacteur et lorsque la réaction de fonctionnalisation est terminée on procédé à la neutralisation du catalyseur et éventuellement à la dévolatilisation de la masse réactionnelle obtenue pour en éliminer l'alcool formé au cours de la réaction de fonctionnalisation et l'excès de l'agent de fonctionnalisation (c'est-à-dire le silane de formule 3).

Pour neutraliser le catalyseur de fonctionnalisation (la lithine) de nombreux produits peuvent être utilisés, par exemple du trichloroéthylphosphate ou du diméthylvinylsilylacétate. On préfère cependant utiliser un silylphosphate, tel que par exemple ceux décrits dans le brevet français 2 410 004.
La dévolatisation est effectuée par exemple sous une pression absolue comprise entre 133 et 13332 pascals.

La demande de brevet selon la présente invention concerne de plus l'utilisation des diorganopolysiloxanes, notamment ceux comprenant au moins deux groupements alcoxy à chaque extrémité de chaîne, obtenus selon le procédé de la présente invention, pour la préparation de compositions polysiloxanes monocomposantes stables au stockage en absence d'humidité et réticulant en élastomère en présence d'humidité.

Ces compositions sont obtenues en ajoutant (en poids) à 100 parties du polymère fonctionnalisée de formule (1) obtenu selon le procédé de la présente invention (contenant le produit de neutralisation de la lithine) :

- 0 à 250 parties de charges minérales,
- 0 à 20 parties, de préférence 0 à 10 parties d'au moins un additif choisi parmi des aminoorganosilanes, aminoorganopolysiloxanes et guanidinoorganosilanes portant par molécule à la fois :
  . (i) au moins un groupe organique en $C_3$-$C_{15}$ lié par une liaison SiC à l'atome de silicium et substitué par au moins un radical amino ou un radical guanidino.
  . (2i) et au moins un radical alcoxy en $C_1$-$C_5$ ou un radical alcoxyalkylène-oxy en $C_3$-$C_6$.
- une quantité efficace d'un catalyseur de condensation.

Par quantité efficace de catalyseur de condensation, on entend par exemple de 0,001 à 1 partie en poids d'au moins un composé d'un métal choisi généralement parmi l'étain, le titane et le zirconium et leurs mélanges.

Comme catalyseur de condensation on peut utiliser les monocarboxylates et les dicarboxylates d'étain tels que l'éthyl-2 hexanoate d'étain, le dilaurate de dibutylétain, le diacétate de dibutylétain (voir le livre de NOLL "Chemistry and technology of silicone", page 337, Academic Press, 1968 - 2ème édition).

Les chelates d'étain de valence IV hexacoordinés tels que ceux décrits dans la demande de brevet européen EP-A-147 323 et le brevet US-A 4 517 337 cités comme référence sont particulièrement appropriés.

Sont également préférés, les catalyseurs de condensation qui sont un mélange d'un bis($\beta$-dicétonate) de diorganoétain avec un dérivé organique de l'étain également de valence IV, mais exempt de fonction $\beta$-dicétonato, et possèdant au moins un atome d'étain, chaque atome d'étain portant deux radicaux organiques liés par une liaison Sn-C, les deux autres valences étant satisfaites au moyen de radicaux choisis parmi les radicaux organiques ou inorganiques liés par une liaison SnO, SnS, par des atomes d'halogènes, par des groupes hydroxy et par des atomes d'oxygène.

Ces dérivés organiques de l'étain de valence IV exempts de fonction $\beta$-dicétonato peuvent être en particulier des sels d'étain répondant aux formules :

$A_2SnR^6{}_2$
$R^6SnO$,
$AR^6{}_2SnOSnR^6{}_2A$

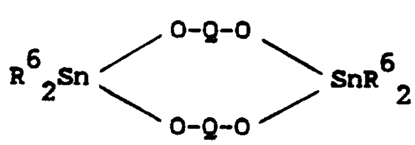

dans lesquelles :

- $R^6$ représente un radical hydrocarboné, halogéné ou non, en $C_1$-$C_{20}$,
- A représente un radical organique ou inorganique, lié à l'atome d'étain par une liaison Sn-O ou Sn-S, un atome d'halogène,
- Q représente un radical alkylène en $C_2$-$C_{10}$, A peut être choisi dans le groupe constitué :
  . (i) des radicaux mono-carboxylates de formule $R^7COO$, $R^7$ étant un radical hydrocarboné, halogéné ou non, en $C_1$-$C_{20}$,

. (2i) des radicaux dicarboxylates de formule

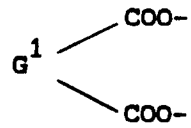

liés à un même atome d'étain ou à deux atomes d'étain conduisant aux deux formules :

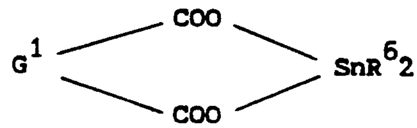

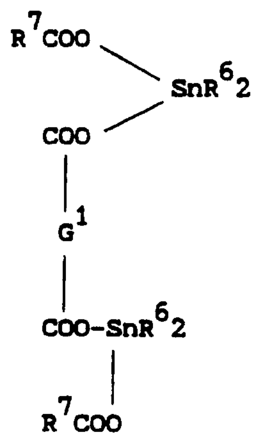

dans lesquelles $G^1$ représente un radical hydrocarboné divalent en $C_1$-$C_{15}$ et $R^7$ a la signification donnée sous (i),

. (3i) des radicaux dicarboxylates de formule $R^7OCOG^1COO$ dans laquelle $R^7$ et $G^1$ ont la signification donnée respectivement sous (i) et (2i).

Les sels d' étain ci-dessous sont bien connus et son décrits en particulier dans l'ouvrage de NOLL précité, les brevets US-A-3 186 963, 3 862 919, le brevet belge 842 305 et le brevet britannique GB-A-1 289 900 cités comme référence.

Les charges minérales sont utilisées à raison de 0 à 250 parties, de préférence de 5 à 200 parties pour 100 parties de PF de formule (1).

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 m2/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre ; leur surface spécifique est généralement inférieure à 30 m2/g.

Ces charges peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclopolysiloxanes (brevet français FR-A-1 126 884, FR-A-1 136 885, FR-A-1 236 505 ; brevet anglais GB-A-1 024 234). Les charges traitées renferment, dans la plupart des cas, de 3 à 30 % de leurs poids de composés organosiliciques.

Les charges peuvent être constituées d'un mélange de plusieurs types de charges de granulométrie différente ; ainsi par exemple, elles peuvent être constituées de 30 à 70 % de silices finement divisées de surface spécifique BET supérieure à 40 m2/g et de 70 à 30 % de silices plus grossièrement divisées de surface spécifique inférieure à 30 m2/g.

Les compositions selon l'invention peuvent éventuellement contenir en outre pour améliorer notamment l'adhérence des EVF de 0 à 20 parties, de préférence de 1 à 15 parties d'au moins un additif choisi parmi des aminoorganosilanes, aminoorganopolysiloxanes et guanidinoorganosilanes portant par molécule à la fois :

. (i) au moins un groupe organique en $C_3$-$C_{15}$ lié par une liaison SiC à l'atome de silicium et substitué par au moins un radical amino ou un radical guanidino.

. (2i) et au moins un radical alcoxy en $C_1$-$C_5$ ou un radical alcoxyalkylène en $C_3$-$C_6$.

Ces additifs et leurs modes d'utilisation sont en particulier décrits dans les brevets US-A-2 754 311, US-A-2 832 754, US-A-2 930 809, US-A-2 971 864, US-A-3 341 563, US-A-3 686 375, US-A-4 180 642.

Parmi ces additifs on peut en particulier citer les silanes de formule :

$H_2N(CH_2)_3Si(OC_2H_5)_3$

$H_2N(CH_2)_3Si(OCH_3)_3$

$H_2N(CH_2)_2NH(CH_2)_3Si(OCH_3)_3$

Des promoteurs d'adhérence particulièrement appropriés sont les silanes de formule :

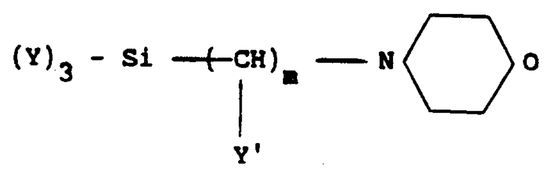

Dans laquelle Y est un radical alkyle ou alcoxy ayant inclusivement de 1 à 4 atomes de carbone, au moins deux des radicaux Y étant des radicaux alcoxy, Y' identiques ou différents sont choisis parmi l'atome d'hydrogène et Un radical alkyle ayant inclusivement de 1 à 3 atomes de carbone et a est un nombre entier compris entre 3 et 10 inclusivement.

Comme silane on peut citer :

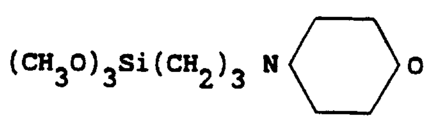

gammamorpholinopropyltriméthoxysilane

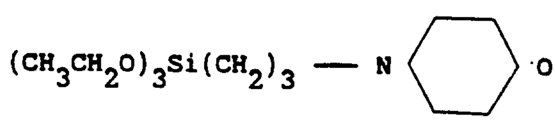

gammamorpholinopropyltriéthoxysilane.

Ces produits et leur procédé de préparation sont décrits par John L. SPEIER, I. Org. Chem., vol. 36, n° 21, 1971, page 3 120.

EXEMPLE 1

On introduit dans un réacteur 100 g (0,143 mole) d'un αω dihydroxypolydiméthylsiloxane ayant 3,8 % en poids de radicaux hydroxy. Ce polysiloxane a pour formule moyenne

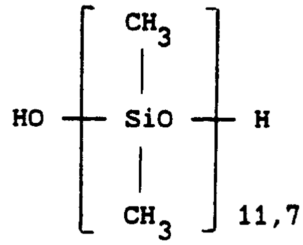

et un poids moléculaire de 696,6 g.

On introduit de l'azote anhydre dans ce réacteur et sous agitation on introduit, à la température ambiante (23 °C) 75 g (0,55 mole) de méthyltriméthoxysilane et 0,23 g (5,5 millimole) de lithine de formule $LiOH,H_2O$, cette dernière étant en solution dans du méthanol (solution à 10 % en poids de lithine dans du méthanol).

Après 5 minutes de réaction on neutralise la lithine en ajoutant à la masse réactionnelle obtenue 3 g du résidu réactionnel de phosphate de silyle présentant une teneur équivalente en acide phosphorique de 12,5 % et préparé selon l'exemple 2 du brevet français 2 410 004.

Après dévolatisation de l'excès de méthyltriméthoxysilane et de l'alcool formé de la masse réactionnelle (sous 16 x 133,32 pascals) on constate en $RMN^1H$ et $RMN^{29}Si$ que l'huile obtenue a bien la structure

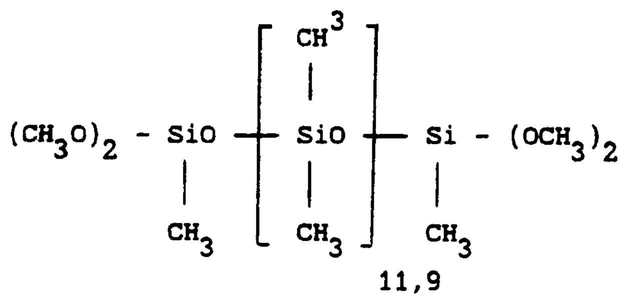

EXEMPLE 2

On opère selon l'exemple 1 ci-avant en introduisant dans le réacteur :

- 100 g (0,769 millimole) de $\alpha$ $\omega$ dihydroxypolydiméthylsiloxane, de viscosité 130 000 mPa.s à 25 °C, contenant 770 ppm de groupement hydroxy.
- 5 g (36,7 millimole) de méthyltriméthoxysilane,
- 0,005 g (0,119 millimole) de $LiOH,H_2O$ en solution dans le méthanol (à 10 %).

On laisse réagir 3 minutes à 25 °C et ajoute 0,064 g de la solution neutralisante décrite à l'exemple 1.

La masse réactionnelle obtenue a une viscosité de 80 000 mPa.s à 25 °C. Cette viscosité correspond à celle de l'huile fonctionnalisée diminuée par la présence du méthyltriméthoxysilane introduit en excès. On constate par RMN et IRTF qu'il ne reste plus de groupement silanol.

EXEMPLE 3

L'exemple 2 a été refait mais sans procéder à la neutralisation de la lithine à la fin de la réaction de fonctionnalisation. Le tableau ci-dessous montre l'évolution des viscosités dans le temps (exprimées en mPa.s et à 25 °C), après conservation des polydiméthylsiloxanes fonctionnalisées (chacune des masses réactionnelles ayant été dévolatilisée en fin de réaction) selon l'exemple 2 et selon l'exemple présent.

| après conservation de | exemple 2 viscosité | exemple 3 viscosité |
|---|---|---|
| 2 heures à 20 ° C | 80 000 | 80 000 |
| 4 jours à " | 75 000 | 10 000 |
| 10 jours à " | 78 750 | 9 000 |
| 26 jours à " | 80 000 | 1 000 |

Ce tableau montre qu'il est nécessaire de neutraliser la lithine en fin de réaction de fonctionnalisation pour avoir un polydiorganopolysiloxane fonctionnalisé stable dans le temps.

EXEMPLE 4

On répète l'exemple 2 en remplaçant la lithine par 0,005 g de KOH (0,089 millimole) en solution à 10 % dans le méthanol.

La réaction semble être très rapide, mais lorsqu'on neutralise (avec le même phosphate de silyle que celui utilisé à l'exemple 2) au bout de 2 minutes de réaction, la viscosité de la masse réactionnelle n'est déjà plus que de 35 000 mPa.s. Lorsqu'on neutralise au bout de 30 minutes, la viscosité n'est plus que de 6 500 mPa.s.

Cet essai montre de façon assez inattendue que la lithine peut être utilisée facilement pour l'obtention de polymères fonctionnalisés stables alors que la potasse ne convient pas. Ce résultat est atteint d'autre part même en utilisant une quantité molaire de lithine plus importante que la quantité de potasse.

EXEMPLE 5

Le tableau ci-après montre que la réaction de fonctionnalisation selon le procédé de la présente invention, en utilisant de la lithine selon les quantités indiquées code catalyseur et en opérant avec le $\alpha$ $\omega$ dihydroxypolydiméthylsiloxane selon l'exemple 2 ci-avant dans les conditions de cet exemple 2, permet d'obtenir des polymères fonctionnalisés dans des temps très rapides (inférieurs à 10 minutes) :

- à température ambiante avec des alcoxysilanes assez réactifs tels que $ViSi(OCH_3)_3$ et $MeViSi(OCH_3)_2$
- à des températures inférieures à 80 ° C avec des alcoxysilanes peu réactifs tels que $Si(OC_2H_5)_4$ et $Si\text{-}[O\text{-}CH(CH_3)\text{-}CH_2OCH_3)]_4$.

| alcoxysilane utilisé | g de LiOH, $H_2O$ pour 1000 g de * | température | temps pour obtenir une fonctionnalisation complète |
|---|---|---|---|
| $ViSi(OCH_3)_3$ | 0,005 | 25 ° C | 2 à 3 minutes |
| $MeViSi(OCH_3)_2$ | 0,005 | 25 ° C | 2 à 3 minutes |
| $Si(OC_2H_5)_4$ | 0,04 | 75 ° C | 5 minutes |
| $Si[OCH(CH_3) - CH_2OCH_3]4$ | 0,04 | 65 ° C | 5 minutes |

* $\alpha$ $\omega$ dihydroxypolydiméthylsiloxane selon l'exemple 2 ci-avant

EXEMPLE 6

L'exemple 2 a été reproduit en utilisant un $\alpha$ $\omega$ -dihydroxypolydiméthylsiloxane de viscosité 170 000 mPa.s et en neutralisant la lithine, non pas par un phosphate de silyle, mais par un des neutralisants suivants :

| Neutralisant | Quantité utilisée pour 0,005 g de $LiOH,H_2O$ | Viscosité initiales en mPa.s | Viscosité après 1 mois à 25°C en mPa.s |
|---|---|---|---|
| $CH_3$ COOH | 0,007 g | 108 000 | 110 000 |
| 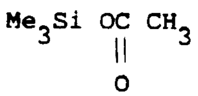 | 0,025 g | 106 000 | 108 000 |
| 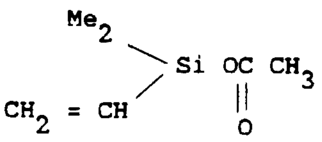 | 0,017 g | 105 000 | 105 000 |

On constate que les huiles fonctionnalisées obtenues ont une viscosité stable.

EXEMPLE 7

On charge dans un appareil muni d'une forte agitation et à l'abri de l'humidité :

- 100 g d'un $\alpha$ $\omega$ - dihydroxypolydiméthylsiloxane de viscosité 20 000 mPa.s
- 5 g de vinyltriméthoxysilane
- 0,005 g de $LiOH,H_2O$ en solution à 10 % dans du méthanol. on laisse 5 mn à 28 °C et ajoute 0,064 g de la solution neutralisante décrite à l'exemple 1.

On ajoute ensuite :

- 3 g de $(CH_3O)_3$ $Si(CH_2)_3$ NH $CH_2$ $CH_2$ $NH_2$
- 0,05 g de dilaurate de dibutylétain
- 105 g d'un carbonate de calcium traité par l'acide stéarique de diamètre moyen 4 à 5 microns.
- 8 g de silice de combustion traitée à l'octaméthylcyclotétrasiloxane.

Le produit obtenu est une pâte non coulante que l'on met dans des tubes fermés ; certains tubes sont conservés à 25 °C, d'autres sont placés 10 jours à 70 °C (test de vieillissement accéléré). On dépose ensuite la pâte sous forme de plaques de 1 à 2 mm d'épaisseur sur un support non adhérent (téflon), laisse réticuler 7 jours à 25 °C sous 60 % d'humidité relative et mesure les propriétés.

| | Tube conservé à 25 °C | Tube conservé 10 jours à 70 °C |
|---|---|---|
| Dureté Shore A | 45 | 40 |
| Module à 100 % | 0,90 MPa* | 0,85 MPa |
| Résistance à la rupture | 1,2 MPa | 1,1 MPa |
| Allongement à la rupture | 225 % | 240 % |

* MPa : mégapascals

Par ailleurs, on constate que les élastomères obtenus par réticulation à l'humidité atmosphérique sur différents supports, présentent généralement sur ceux-ci une excellente adhérence.

La conservation en tube fermé à température ambiante ou même à 70 °C est bonne ; il n'est donc pas nécessaire d'utiliser des composés destinés à éliminer les dernières traces de silanols tels que les "scavengers" décrits dans les brevets n° EP 69 256, EP 104 179 et FR 2 543 562.

Le procédé de fonctionnalisation par la lithine est suffisamment efficace pour donner rapidement des huiles fonctionnalisées stables. Ces huiles peuvent facilement être utilisées pour préparer des compositions d'élastomères silicones monocomposantes réticulant par l'humidité atmosphérique stables en tube fermé.

## Revendications

**1.** Procédé de préparation de diorganopolysiloxane linéaire comprenant au moins un groupement alcoxy lié à un atome de silicium à chaque extrémité de chaîne, caractérisé en ce qu'on fait réagir au moins un diorganopolysiloxane linéaire, comprenant un groupement hydroxy lié à un atome de silicium à chaque extrémité de chaîne, avec par motif silanol au moins 1 mole d'au moins un polyalcoxysilane de formule :

$(R^4)_c\ (R^1)_a\ Si\ (OR^2)_{4-(a+c)}$ (3)

en présence d'une quanitité catalytiquement efficace de lithine,

- où a est 0, ou 1, ou 2
- où c est 0, ou 1, ou 2
- où a + c est 0, ou 1 ou 2
- où $R^1$ représente
  - un radical monovalent hydrocarboné saturé ou non en $C_1$ à $C_{13'}$, aliphatique, cyclanique ou aromatique, pouvant comporter une fonction époxy, amine primaire, secondaire, tertiaire, mercapto, ou
  - un radical $-(CH_2)_2-CH_2Cl$
- où $R^2$ représente un radical organique aliphatique ayant de 1 à 8 atomes de carbone choisi notamment entre les radicaux alkyle, les radicaux alkyléther, les radicaux alkylester, les radicaux alkylcétone, les radicaux et les radicaux aralkyle ayant de 7 à 13 atomes de carbone, étant entendu que les groupements alcoxy du silane de formule (3) peuvent avoir chacun une signification différente pour $R^2$ ou la même signification,
- où $R^4$ représente un radical monovalent hydrocarboné saturé ou non en $C_1$ à $C_{13}$, aliphatique, cyclanique ou aromatique, $R^4$ pouvant être identique à $R^1$,

**2.** Procédé selon la revendication 1, caractérisé en ce que le diorganopolysiloxane linéaire comprenant au moins un groupement alcoxy à chaque extrémité de chaîne a pour formule

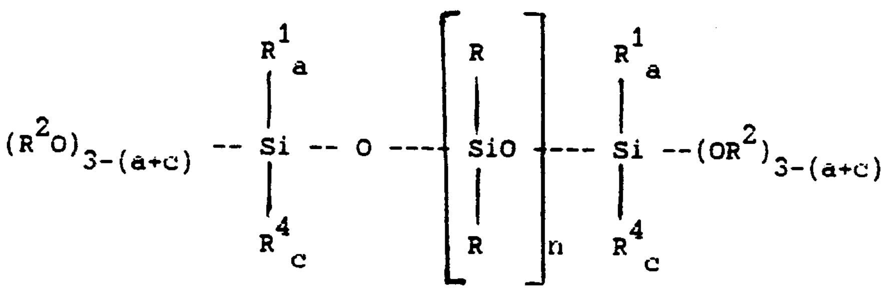

(1)

et en ce que le diorganopolysiloxane linéaire comprenant un groupement hydroxy à chaque extrémité de sa chaîne a pour formule

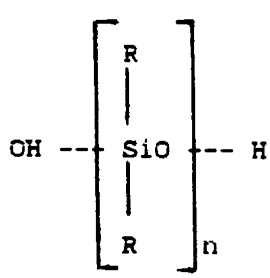

(2)

- où $R^1$ et $R^2$ ont la même signification que celle donnée dans la revendication 1,
- où les radicaux R, identiques ou différents représentent des radicaux monovalents hydrocarbonés ayant de 1 à 10 atomes de carbone, éventuellement substitués par des atomes d'halogènes ou

des groupes cyano,
- où a est 0, ou 1, ou 2,
- où c = 0, ou 1, ou 2,
- où a + c = 0, ou 1 ou 2,
- où n a une valeur suffisante pour conférer aux diorganopolysiloxanes de formule (1) et (2) une viscosité de 25 à 1 000 000 mPa.s à 25 °C.

**3.** Procédé selon la revendication 2 caractérisé en ce que le radical R dans les formules (1) et (2) est choisi de préférence parmi les radicaux méthyle, phényle, vinyle et trifluoropropyle.

**4.** Procédé selon l'une quelconque des revendications précédentes caractérisé en ce que le polyalcoxysilane de formule (3) est choisi de préférence parmi le méthyltriméthoxysilane, le vinyltriméthoxysilane, le tétraéthoxysilane, le vinyltriéthoxysilane, le méthylvinyldiméthoxysilane.

**5.** Procédé selon l'une quelconque des revendications précédentes caractérisé en ce que la lithine est utilisée en solution dans un alcool.

**6.** Procédé selon l'une quelconque des revendications précédentes caractérisé en ce que la réaction de fonctionnalisation entre le produit de formule (2) et le produit de formule (3) est terminée en moins de 10 minutes.

**7.** Procédé selon l'une quelconque des revendications précédentes caractérisé en ce que la réaction de fonctionnalisation entre le produit de formule (2) et le produit de formule (3) a lieu à la température ambiante.

**8.** Procédé selon l'une quelconque des revendications précédentes caractérisé, en ce qu'à la fin de la action de fonctionnalisation entre le produit de formule (2) et le produit de formule (3) on neutralise la lithine.

**9.** Procédé selon l'une quelconque des revendications précédentes caractérisé en ce que la lithine est neutralisée par du phosphate de silyle.

**Claims**

**1.** Process for the preparation of linear diorganopolysiloxanes containing at least one alkoxy group linked to a silicon atom at each end of the chain, characterized in that at least one linear diorganopolysiloxane containing a hydroxyl group linked to a silicon atom at each end of the chain is reacted with, per silanol moiety, at least one mole of at least one polyalkoxysilane of the formula:

$(R^4)_c\ (R^1)_a\ Si\ (OR^2)_{4-(a+c)}$ (3)

in the presence of a catalytically effective quantity of lithium hydroxide,
- where a is 0 or 1 or 2
- where c is 0 or 1 or 2
- where a + c is 0 or 1 or 2
- where $R^1$ represents
  - a saturated or unsaturated $C_1$ to $C_{13}$ monovalent aliphatic, alicyclic or aromatic hydrocarbon radical, which may include an epoxy, primary, secondary or tertiary amine or a mercapto functional group, or
  - a radical $-(CH_2)-CH_2Cl$
- where $R^2$ represents an aliphatic organic radical having from 1 to 8 carbon atoms, chosen particularly from alkyl radicals, alkyl ether radicals, alkyl ester radicals, alkyl ketone radicals, alklcyano radicals and aralkyl radicals having from 7 to 13 carbon atoms, it being understood that the alkoxy groups of the silane of formula (3) may each have a different meaning for $R^2$ or the same meaning,
- where $R^4$ represents a saturated or unsaturated $C_1$ to $C_{13}$ monovalent aliphatic, alicyclic or aromatic hydrocarbon radical, it being possible for $R^4$ to be identical to $R^1$.

**2.** Process according to claim 1, characterized in that the linear diorganopolysiloxane containing at least one alkoxy group at each end of the chain has the formula

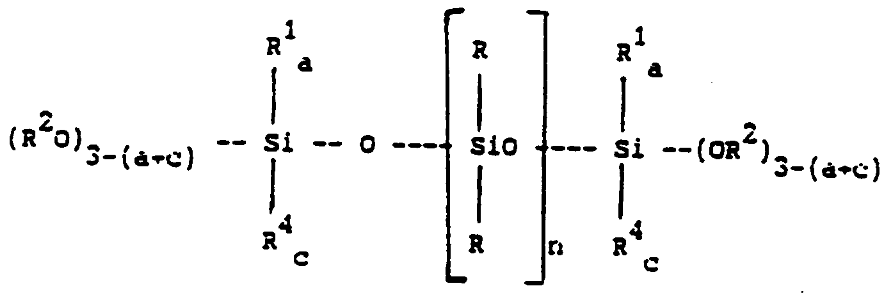

(1)

and in that the linear diorganopolysiloxane containing a hydroxyl group at each end of its chain has the formula

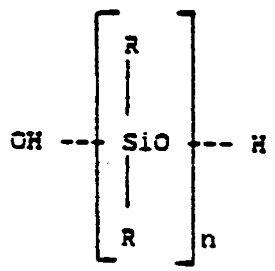

(2)

- where $R^1$ and $R^2$ have the same meaning as that given in claim 1,
- where the radicals R, which may be identical or different, represent monovalent hydrocarbon radicals having from 1 to 10 carbon atoms, optionally substituted with halogen atoms or with cyano groups,
- where a is 0 or 1 or 2,
- where c = 0 or 1 or 2,
- where a + c = 0 or 1 or 2,
- where n has a sufficient value to impart to the diorganopolysiloxanes of formula (1) and (2) a viscosity of 25 to 1,000,000 mPa.s at 25 °C.

**3.** Process according to claim 2, characterized in that the radical R in the formulae (1) and (2) is preferably chosen from methyl, phenyl, vinyl and trifluoropropyl radicals.

**4.** Process according to any one of the preceding claims characterized in that the polyalkoxysilane of formula (3) is preferably chosen from methyltrimethoxysilane, vinyltrimethoxysilane, tetraethoxysilane, vinyltriethoxysilane and methylvinyldimethoxysilane.

**5.** Process according to any one of the preceding claims, characterized in that the lithium hydroxide is used in solution in an alcohol.

**6.** Process according to any one of the preceding claims, characterized in that the functionalization reaction between the product of formula (2) and the product of formula (3) is terminated in less than 10 minutes.

**7.** Process according to any one of the preceding claims, characterized in that the functionalization reaction between the product of formula (2) and the product of formula (3) takes place at ambient temperature.

**8.** Process according to any one of the preceding claims, characterized in that, at the end of the functionalization reaction between the product of formula (2) and the product of formula (3), the lithium hydroxide is neutralized.

9. Process according to any one of the preceding claims, characterized in that the lithium hydroxide is neutralized by silyl phosphate.

**Patentansprüche**

1. Verfahren zur Herstellung von linearen Diorganopolysiloxanen, die mindestens eine Alkoxygruppe umfassen, die an ein Siliciumatom an jedem Ende der Kette gebunden ist, dadurch gekennzeichnet, daß man mindestens ein lineares Diorganopolysiloxan, das eine Hydroxygruppe umfaßt, die an ein Siliciumatom an jedem Ende der Kette gebunden ist, mit pro Einheit Silanol mindestens 1 Mol von mindestens einem Polyalkoxysilan der Formel (3)

$(R^4)_c\ (R^1)_a\ Si\ (OR^2)_{4-(a+c)}$ (3)

in Anwesenheit einer wirksamen katalytischen Menge von Lithiumhydroxid zur Reaktion bringt, wobei
- a gleich 0, 1 oder 2 ist,
- c gleich 0, 1 oder 2 ist,
- a + c gleich 0, 1 oder 2 ist,
- $R^1$ einen monovalenten gesättigten oder ungesättigten, aliphatischen, cycloaliphatischen oder aromatischen Kohlenwasserstoff-Rest von $C_1$ bis $C_{13}$ darstellt, der eine Epoxyfunktion, primäre, sekundäre oder tertiäre Aminfunktion, Mercaptofunktion oder einen Rest $-(CH_2)_2-CH_2Cl$ umfassen kann,
- $R^2$ einen aliphatischen organischen Rest mit 1 bis 8 Kohlenstoffatomen darstellt, insbesondere ausgewählt unter den Alkylresten, den Alkyletherresten, den Alkylesterresten, den Alkylcetonresten, den Alkylcyanoresten und den Aralkylresten mit 7 bis 13 Kohlenstoffatomen, mit der Maßgabe, daß die Alkoxygruppen des Silans der Formel (3) jeweils eine unterschiedliche oder die gleiche Bedeutung für $R^2$ besitzen können,
- $R^4$ einen monovalenten gesättigten oder ungesättigten, aliphatischen, cycloaliphatischen oder aromatischen Kohlenwasserstoff-Rest von $C_1$ bis $C_{13}$ darstellt, wobei $R^4$ mit $R^1$ identisch sein kann.

2. Verfahren nach Anspruch 1, dadurch gekennzeichnet, daß das lineare Diorganopolysiloxan, das mindestens eine Alkoxygruppe an jedem Ende der Kette umfaßt, die Formel (1)

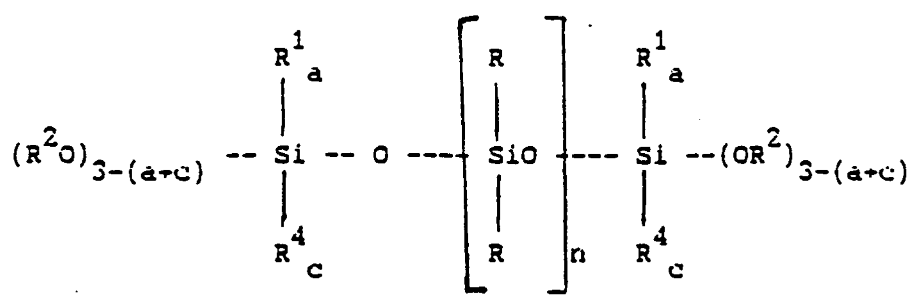

(1)

besitzt und daß das lineare Diorganopolysiloxan, das eine Hydroxygruppe an jedem Ende seiner Kette umfaßt, die Formel (2)

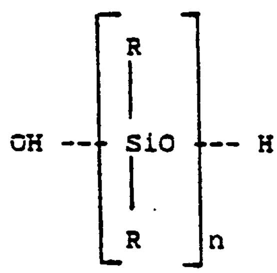

(2)

besitzt, worin

- $R^1$ und $R^2$ die gleiche Bedeutung haben wie in Anspruch 1 angegeben,
- die Reste R, gleich oder verschieden, monovalente Kohlenwasserstoffreste mit 1 bis 10 Kohlenstoffatomen darstellen, gegebenenfalls substituiert durch Halogenatome oder Cyanogruppen,
- a gleich 0, 1 oder 2 ist,
- c gleich 0, 1 oder 2 ist,
- a + c gleich 0, 1 oder 2 ist,
- n einen Wert besitzt, der ausreichend ist, um den Diorganopolysiloxanen der Formeln (1) und (2) eine Viskosität von 25 bis 1.000.000 mPa·s bei 25 °C zu verleihen.

**3.** Verfahren nach Anspruch 2, dadurch gekennzeichnet, daß der Rest R in den Formeln (1) und (2) vorzugsweise unter den Resten Methyl, Phenyl, Vinyl und Trifluorpropyl ausgewählt wird.

**4.** Verfahren nach irgendeinem der vorstehenden Ansprüche, dadurch gekennzeichnet, daß das Polyalkoxysilan der Formel (3) vorzugsweise unter Methyltrimethoxysilan, Vinyltrimethoxysilan, Tetraethoxysilan, Vinyltriethoxysilan und Methylvinyldimethoxysilan ausgewählt wird.

**5.** Verfahren nach irgendeinem der vorstehenden Ansprüche, dadurch gekennzeichnet, daß das Lithiumhydroxid in Lösung eines Alkoholes verwendet wird.

**6.** Verfahren nach irgendeinem der vorstehenden Ansprüche, dadurch gekennzeichnet, daß die Reaktion der Funktionalisierung zwischen dem Produkt der Formel (2) und dem Produkt der Formel (3) in weniger als 10 Minuten beendet ist.

**7.** Verfahren nach irgendeinem der vorstehenden Ansprüche, dadurch gekennzeichnet, daß die Reaktion der Funktionalisierung zwischen dem Produkt der Formel (2) und dem Produkt der Formel (3) bei Umgebungstemperatur stattfindet.

**8.** Verfahren nach irgendeinem der vorstehenden Ansprüche, dadurch gekennzeichnet, daß man am Ende der Reaktion der Funktionalisierung zwischen dem Produkt der Formel (2) und dem Produkt der Formel (3) das Lithiumhydroxid neutralisiert.

**9.** Verfahren nach irgendeinem der vorstehenden Ansprüche, dadurch gekennzeichnet, daß das Lithiumhydroxid durch Silylphosphat neutralisiert wird.